# EUROPÄISCHE PATENTANMELDUNG

(11) **EP 3 992 061 A1**
(43) Veröffentlichungstag der Anmeldung: **04.05.2022**
(21) Anmeldenummer: 21205206.2
(22) Anmeldetag: 28.10.2021
(51) Int. Cl.: B62D 33/06

(54) **VERFAHREN ZUR LAGEREGELUNG EINER FAHRERKABINE**

(30) Priorität: 03.11.2020 DE 102020213794
(71) Anmelder: ContiTech Luftfedersysteme GmbH, 30165 Hannover (DE)
(72) Erfinder: Gerami-Manesch, Bijan, 30419 Hannover (DE); Möllenbruck, Bernd, 30419 Hannover (DE); Braun, Patrik, 30419 Hannover (DE)
(74) Vertreter: Continental Corporation

(57) **Zusammenfassung**

Die Erfindung betrifft ein Verfahren zur Lageregelung einer Fahrerkabine mit in oder an der Kabine starr montierten Sensoren für Fahrerassistenzsysteme, wobei die Fahrerkabine auf dem Chassis gelagert und verstellbar ist.

Hierbei wird die Lagerung einer Fahrerkabine dadurch erzielt, indem ein oder mehrere Stellglieder in Form verstellbarer Luftfederelemente ausgebildet sind und eine Vielzahl von am Fahrzeug befindlichen Sensoren Zustandsgrößen erfassen, die vorzugsweise mit auf dem Streckenverlauf einer Fahrtroute vorausliegenden und in einer Datenbank hinterlegten Geodaten / Topographiedaten in einer Recheneinheit zur Regelung der Kabinenneigung in Steuersignale zur Verstellung der Luftfederelemente verarbeitet werden.

## Beschreibung

Die Erfindung betrifft ein Verfahren zur Lageregelung einer Fahrerkabine mit in oder an der Kabine starr montierten Sensoren für Fahrerassistenzsysteme, wobei die Fahrerkabine auf dem Chassis gelagert und verstellbar ist.

### Stand der Technik

Fahrerkabinen für Lastkraftwagen oder landwirtschaftliche Fahrzeuge sind üblicher Weise über Feder- und Dämpfungselemente, meist in Form von Luftfedern, auf dem Chassis eines Fahrzeugs gelagert. Die Feder- und Dämpfungselemente entkoppeln die Fahrerkabine von dem Chassis, absorbieren Stöße und Vibrationen und gewährleisten einen angenehmen Fahrkomfort. Bekannter Weise sind die Fahrerkabinen passiv gefedert und gedämpft. Mit dem zunehmenden Einzug von assistiertem Fahren und autonomen Fahrfunktionen werden beispielsweise kamera- oder radarbasierte Sensorsysteme im Bereich der Fahrerkabine installiert. Diese Sensorsysteme überwachen Distanzen von zum Teil mehreren hundert Metern vor dem Fahrzeug, um zum Beispiel bei einer Objekterkennung eine rechtzeitige Warnung bei noch ausreichender Reaktionszeit für einen aktiven Eingriff der Fahrerassistenzsysteme zu erzeugen. Die Lage der Fahrerkabine ist relativ zu der Lage des Chassis nicht aktiv regelbar, weshalb bei Annäherung an Kuppen und Senken die Ausrichtung der Sensorsysteme auf den weiteren Routenverlauf nicht optimal gegeben ist. Der Messbereich der Sensorsysteme ist eingeschränkt, wodurch beispielsweise eine Objekterkennung erst verspätet erfolgt und sich die Reaktionszeiten für Warnungen zum Hinweis an den Fahrer oder einen aktiven Eingriff in die Fahrzeugsteuerung verkürzen und die Unfallgefahr somit steigt.

Im Allgemeinen sind bereits Anwendungen bekannt, bei denen unter Zuhilfenahme von sensorbasierter Datenerfassung in Kombination mit in Datenbanken hinterlegten Geodaten eine vorausschauende Regelung verschiedener Fahrzeugeinstellungen erfolgt.

So offenbart die DE102006001818A1 eine rechnergestützte Einstellung einer oder mehrerer Fahrbetriebskomponenten eines Fahrzeuges unter Berücksichtigung der auf dem Streckenverlauf vorausliegenden Topographie einer Fahrtroute. Dies kann die Fahrzeuggeschwindigkeit, die Beschleunigung und Verzögerung sowie die Getriebesteuerung und -schaltung betreffen.

Die DE102006048398A1 offenbart ein Fahrzeugregelungssystem und -verfahren, bei dem die Lichtsteuerung durch Einbezug verschiedener Sensoreingangsgrößen und dem Kartenmaterial des Navigationssystems erfolgt.

Derartige Lösungen steigern den Komfort und unterstützen vorhandene kamera- und radarbasierte Fahrerassistenzsysteme. Für die Gewährleistung der Funktion und Sicherheit von Fahrerassistenzsystemen für autonome Fahrfunktionen gilt es primär die Zuverlässigkeit der kamera- und radarbasierten Sensorsysteme sicherzustellen. Diese Anforderung wird durch die Gegenstände in den eingangs zitierten Offenlegungsschriften nicht erfüllt.

Die DE4321152A1 offenbart ein landwirtschaftliches Fahrzeug, dessen Kabine über Gummilager auf dem Rumpf des Fahrzeuges gelagert ist. Zur Steigerung des Fahrkomforts sind zwischen Kabine und Rumpf zusätzlich zwei Stellglieder angeordnet, die in Abhängigkeit einer sensorbasierten Lageerkennung des Fahrzeuges bzw. der Kabine durch eine im Fahrzeug vorgesehene Steuereinheit betätigt werden. Nachteiliger Weise werden in diesem Fall für die Lageregelung zusätzliche Stellglieder benötigt, welche zu erhöhten Systemkosten führen.

### Aufgabe

Der Erfindung liegt die Aufgabe zugrunde, ein Verfahren zur Lageregelung einer Fahrerkabine von Fahrzeugen zu entwickeln, sodass die Kabinenneigung in Abhängigkeit der auf der Fahrtroute vorausliegenden Topographie und unter Berücksichtigung weiterer fahrzeugbasierter Sensordaten aktiv eingestellt werden kann. Insbesondere liegt die Aufgabe darin, bei in oder an der Kabine starr montierten Sensoren für Fahrerassistenzsysteme deren Erfassungsbereich über die aktive Einstellung der Kabinenneigung zu verbessern, d.h. den vorausliegenden Fahrtroutenverlauf innerhalb des Messbereiches von an der Kabine starr montierten Sensoren für Fahrerassistenzsysteme zu behalten, um die Funktionsfähigkeit von Sensorsystemen für insbesondere autonome Fahrfunktionen sicherzustellen. Um die Systemkosten für die Lageregelung der Fahrerkabine gering zu halten, besteht eine weitere Aufgabe darin, die Lösung unter größtmöglicher Nutzung bereits am Fahrzeug vorhandener Komponenten zu realisieren.

### Lösung der Aufgabe

Die Lösung dieser Aufgabe ergibt sich durch das Verfahren zur Lageregelung einer Fahrerkabine nach dem unabhängigen Anspruch 1. Hierbei wird die Lagerung einer Fahrerkabine dadurch erzielt, dass Stellglieder in Form verstellbarer Luftfederelemente ausgebildet sind und eine Vielzahl von am Fahrzeug befindlichen Sensoren Zustandsgrößen erfassen, die vorzugsweise mit auf dem Streckenverlauf einer Fahrtroute vorausliegenden und in einer Datenbank hinterlegten Geodaten / Topographiedaten in einer Recheneinheit zur Regelung der Kabinenneigung in Steuersignale zur Verstellung der Luftfederelemente verarbeitet werden.

Weitere vorteilhafte Ausbildungen sind in den abhängigen Ansprüchen offenbart.

Der Anspruch 10 offenbart zudem die Verwendung des Verfahrens zur Lageregelung einer Fahrerkabine in Fahrzeugen mit Fahrerassistenzsystemen.

### Vorteile der Erfindung

Das in dem Anspruch 1 offenbarte erfindungsgemäße Verfahren zur Lageregelung einer Fahrerkabine, wobei die Fahrerkabine auf dem Chassis gelagert und durch Stellglieder, ausgebildet in Form verstellbarer Luftfederelemente, verstellbar ist, kann in sämtlichen Fahrzeugen mit luftgefederter oder teilluftgefederter Fahrerkabine zum Einsatz kommen. Insbesondere sind zur Durchführung des Verfahrens höhenverstellbare Luftfederelemente geeignet, deren Anlenkpunkte an Karosserie oder Fahrwerk einerseits und Fahrerkabine andererseits in ihrem Abstand voneinander entweder mechanisch oder pneumatisch verstellbar sind.

Als besonders geeignet zur Anwendung des erfindungsgemäßen Verfahrens seien Lastkraftwagen und landwirtschaftliche Fahrzeuge erwähnt. Eine Vielzahl von am Fahrzeug befindlichen Sensoren erfassen zudem Zustandsgrößen, die vorzugsweise mit auf dem Streckenverlauf einer Fahrtroute vorausliegenden und in einer Datenbank hinterlegten Geodaten / Topographiedaten in einer Recheneinheit, zur Regelung der Kabinenneigung, in Steuersignale zur Verstellung der Luftfederelemente verarbeitet werden können. Die Sensoren können am Chassis, am Motor, im Fahrwerk, im Antriebsstrang oder an sonstigen Stellen im Fahrzeug angeordnet sein und unterschiedliche Zustandsgrößen erfassen; wichtig darunter sind aber im Zusammenhang mit der erfindungsgemäßen Lösung die Sensoren, die in oder an der Kabine starr montiert sind.
Die Verwendung von Luftfedern als Stellglieder ist besonders vorteilhaft, da die aktive Lageregelung der Fahrerkabine durch zum Teil bereits vorhandene Fahrzeugkomponenten realisiert werden kann. Dies ermöglicht eine kostengünstige Umsetzung der gestellten Aufgabe. Insbesondere bei landwirtschaftlichen Fahrzeugen, die häufig in unwegsamen Gelände zum Einsatz kommen, ist eine aktive Lageregelung der Fahrerkabine äußerst vorteilhaft. So kann, beispielsweise bei Fahrten quer zur Hangneigung, die Fahrerkabine auf der den Hang abfallenden Seite angehoben werden, sodass der Fahrer in der Kabine keinen seitlich wirkenden Hangabtriebskräften ausgesetzt ist und über lange Dauer konzentriert und komfortabel seine Arbeit verrichten kann. Das Einbeziehen von Topographiedaten ermöglicht es auf besonders vorteilhafte Art und Weise, die Regelzeiten zur Anpassung der Kabinenneigung zu verkürzen, da neben den aktuell vorliegenden Informationen aus Sensoren zusätzlich bereits die Informationen des vorausliegenden Streckenabschnittes bekannt sind. Außerdem kann die Lageregelung vorausschauend erfolgen und es erfordert zur Veranlassung einer Ansteuerung der Stellglieder nicht erst die Änderung der Lage der Fahrerkabine, wodurch sich wiederum der Fahrkomfort für den Fahrer erhöht.

Gemäß einem weiteren Aspekt sind die Luftfederelemente als Feder- und Dämpfungselemente ausgebildet. Dies ermöglicht auf vorteilhafte Weise eine besonders kompakte und platzsparende Ausführungsform eines Feder-Dämpfungssystems, indem die Feder- und Dämpfungsfunktion in einem Luftfederelement vereint ist.

Gemäß einem weiteren Aspekt erfassen Sensoren die Fahrzeugposition, die Lage / Neigung der Fahrerkabine und / oder des Chassis und die Fahrzeuggeschwindigkeit. Als vorteilhaft zeigt sich, dass viele der Informationen bereits über vorhandene Sensoren im Fahrzeug bereitgestellt werden können, sodass auf zusätzliche Komponenten verzichtet werden kann. Dies ist sowohl vor dem Hintergrund der Verringerung der technischen Komplexität als auch zur Vermeidung von zusätzlichen Kosten für weitere Komponenten vorteilhaft. So kann die Information über die Fahrzeuggeschwindigkeit beispielsweise über die vorhandenen Raddrehzahlsensoren zur Verfügung gestellt werden.

Gemäß einem weiteren Aspekt kann die Fahrzeugposition mittels eines Navigationssatellitensystems zur Positionsbestimmung, vorzugsweise GPS und / oder über das Mobilfunknetz bestimmt werden. Dies ist besonders vorteilhaft, da eine die Zuverlässigkeit steigernde redundante Datenerhebung erfolgen kann. Zudem kann die Standortbestimmung durch das jeweils genauere Verfahren erfolgen.

Gemäß einem weiteren Aspekt kann die Fahrzeugposition anhand einer drahtlosen Kommunikation zwischen den Fahrzeugen untereinander und der Verkehrsinfrastruktur und / oder dem Fahrzeugumfeld bestimmt werden. Die Vernetzung der Fahrzeuge untereinander erfolgt üblicher Weise über ein leistungsfähiges Mobilfunknetz, beispielsweise über das 5G-Netz. Bei der sogenannten "Car-to-Car Kommunikation" sind die einzelnen Verkehrsteilnehmer sowohl untereinander als auch mit stationären Objekten der Verkehrsinfrastruktur, welche beispielsweise Ampeln, Brücken oder auch Baustellen umfasst, vernetzt. Dies ermöglicht auf vorteilhafte Weise, dass eine Bestimmung der Fahrzeugposition sowohl relativ zu anderen Verkehrsteilnehmern erfolgen kann, wodurch weitere sicherheitsrelevante Informationen, die nicht durch die Fahrzeugsensorik erfasst werden können, zur Verfügung gestellt werden können, als auch eine absolute Positionsbestimmung in Relation zu den zuvor genannten stationären Objekten erfolgen kann.

Gemäß einem weiteren Aspekt erfolgt die Lagebestimmung der Fahrerkabine und / oder des Chassis über einen 2- oder 3-Achs Beschleunigungssensor. Dies bietet den Vorteil, aus einem besonders großen Portfolio von Standard-Komponenten wählen zu können, um eine kostengünstige Umsetzung des Regelungssystems realisieren zu können.

Eine besonders vorteilhafte Ausführungsform ergibt sich dadurch, dass die Fahrtroute aus dem Geschwindigkeitsvektor und dem vorausliegenden Streckenverlauf oder auch Straßenverlauf bestimmt werden kann. Insbesondere für Fahrzeuge ohne Navigationssystem bietet sich dieses Bestimmungsverfahren an, wodurch die Verwendung einer Lageregelung für eine Fahrerkabine in einer großen Anzahl von Fahrzeugen ermöglicht wird. Darüber hinaus ist für die Funktionsfähigkeit der Lageregelung der Fahrerkabine bei Fahrzeugen mit Navigationssystem keine Eingabe der Route vor Fahrtantritt erforderlich.

Gemäß einem weiteren Aspekt bestimmt sich die Fahrtroute aus der Routeninformation des Navigationssystems. Bei Vorhandensein und der Verwendung eines Navigationssystems ist dieses Bestimmungsverfahren vorteilhaft, da auf bereits vorhandene Informationen zurückgegriffen werden kann, ohne weitere redundante Datenmengen zu erzeugen.

Eine weitere besonders vorteilhafte Ausführungsform besteht darin, dass durch einen Abgleich der Daten zur Fahrzeugposition, Fahrzeuggeschwindigkeit und der Neigung der Fahrzeugkabine und / oder des Chassis mit den Geodaten eine Standortkorrektur durchgeführt werden kann. Dies ist für eine zuverlässige Regelung der Kabinenneigung von Vorteil, da allein die Positionsbestimmung über ein Globales Positionsbestimmungssystem (GPS) Signal häufig ungenau ist. Beispielsweise kann durch den Abgleich der GPS-Position und der Ermittlung des Fahrtrichtungsvektors aus den historischen GPS-Informationen sowie der Information zur Lage der Fahrerkabine oder des Chassis die Plausibilität der Standortinformation überprüft werden. Sollte die aktuelle Neigungsinformation unter Berücksichtigung des Fahrtrichtungsvektors eine Bergabfahrt signalisieren, während das GPS-Signal unter Berücksichtigung des Fahrtrichtungsvektors die Information einer Bergauffahrt liefert, so kann mit dem Wissen einer oft ungenauen Standortbestimmung durch GPS eine Standortkorrektur anhand zusätzlicher Geodaten / Topographiedaten durchgeführt werden. Hierbei wird basierend auf der vorliegenden Neigungsinformation unter Berücksichtigung des Fahrtrichtungsvektors ein der GPS-Position nächstliegender und der Neigungsinformation deckungsgleicher Standort aus den Geodaten / Topographiedaten zugeordnet.

Eine weitere Ausführungsform sieht die Verwendung des erfindungsgemäßen Verfahrens zur Lageregelung einer Fahrerkabine in Fahrzeugen mit Fahrerassistenzsystemen, vorzugsweise bei Fahrzeugen mit an der Fahrerkabine befindlicher Sensorik, vor. Dies erweist sich als besonders vorteilhaft, da durch die aktive Lageregelung der Kabine eine sich an dieser befindlichen Sensorik optimal auf den vorausliegenden Routenverlauf ausgerichtet werden kann. Hierdurch wird eine Verbesserung der Funktionsfähigkeit und Zuverlässigkeit von Sensorsystemen für Fahrerassistenzsysteme ermöglicht, da eine Objekterkennung auf lange Distanz, unabhängig von der Topographie der vorausliegenden Fahrtroute, erfolgen kann. Somit kann eine rechtzeitige Warnung an den Fahrer bei noch ausreichender Reaktionszeit für einen aktiven Eingriff der Sicherheitssysteme erzeugt werden.

### Erläuterung Figuren

Anhand der Zeichnung wird im Folgenden ein Ausführungsbeispiel der Erfindung näher erläutert.

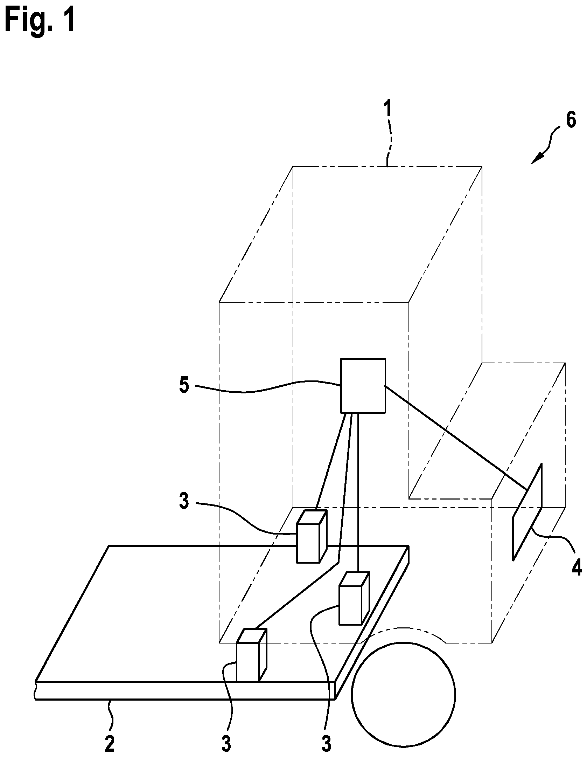

Fig. 1 zeigt dazu die schematische Darstellung des Vorderwagens eines Lastkraftwagens 6 (LKW). Hierbei ist die Fahrerkabine 1 über Luftfederelemente 3 auf dem Chassis 2 des LKW 6 schwingungsdämpfend gelagert. Des Weiteren ist an der Front des LKW 6 ein Sensor 4 dargestellt. Die Darstellung umfasst hierbei alle möglichen Sensoren für Fahrerassistenzsysteme, beispielsweise Kamerasysteme zur Objektdetektion oder Abstandsmessung zu vorausfahrenden Fahrzeugen. Die Positionierung der Sensoren 4 an der Front des LKW 6 ist exemplarisch gewählt und schließt andere Positionierungen nicht aus. Die Fahrerkabine 1 ist über drei Luftfederelemente 3 auf dem Chassis 2 gelagert, die so angeordnet sind, dass eine aktive Verstellung der Fahrerkabine 1 sowohl um eine über die Kabinenbreite verlaufende Achse als auch um eine in Kabinenlänge verlaufende Achse möglich ist. Dies ist möglich, da die Luftfederelemente 3 als Stellglieder ausgebildet sind, indem durch Veränderung des Luftvolumens im Inneren des Luftfederbalges eine Höhenänderung des Luftfederelementes 3 erfolgt, die sich unmittelbar auf die darauf gelagerte Fahrerkabine 1 überträgt. Die Veränderung des Luftvolumens erfolgt durch das Öffnen und Schließen von Ventilen vor den jeweiligen Luftfederelementen, die mit einer Druckluftversorgung verbunden sind. Durch eine zusammenhängende Ansteuerung jedes der einzelnen Luftfederelemente 3 kann die Lage der Fahrerkabine 1 um ihre Längs- und Querachse geregelt werden. Die für die Lageregelung erforderlichen Daten werden aus den Sensorinformationen 4, verfügbaren Daten innerhalb des Fahrzeuges 6 und einer Datenbank für Geodaten / Topographiedaten bezogen und innerhalb einer Recheneinheit 5 zusammengeführt und zur Ausgabe von Steuerungssignalen an die einzelnen Luftfederelemente 3 ausgewertet.

Ein potenzieller Anwendungsfall der aktiven Lageregelung einer Fahrerkabine 1 wird im Folgenden insbesondere für LKW 6 mit an der Fahrerkabine 1 angebundener Sensorik 4 für Fahrerassistenzsysteme erläutert.
Fahrerassistenzsysteme übernehmen zunehmend teilautonome oder vollautonome Fahrfunktionen, die den Fahrer insbesondere auf langen Strecken entlasten. Voraussetzung hierfür sind eine Vielzahl von Sensoren 4 im Bereich der Fahrerkabine 1, die einen Bereich vor dem LKW 6 von zum Teil mehreren hundert Metern überwachen, um rechtzeitige Regeleingriffe vornehmen zu können. Die Zuverlässigkeit der Objektdetektion über eine große Distanz ist maßgeblich für die Sicherheit der Fahrerassistenzsysteme. Voraussetzung hierfür ist, dass der Straßenverlauf stets im Erfassungsbereich der Sensoren 4 ist. Bewegt sich der LKW 6 beispielsweise auf einen ansteigenden Straßenverlauf zu, so ist die Fahrerkabine 1 in ihrer Neigung zu verstellen, um den vorausliegenden ansteigenden Straßenverlauf im Erfassungsbereich des Sensors 4 zu behalten. Die Information über die Topographie des vorausliegenden Straßenverlaufs kann über in Datenbanken hinterlegte Geodaten bezogen werden. Über eine GPS Standortbestimmung des LKW 6 und einen aus den historischen GPS Daten gebildeten Fahrtrichtungsvektor können die für die Regelung der Kabinenneigung relevanten Geodaten des vorausliegenden Straßenverlaufs bestimmt werden. Die über einen Beschleunigungssensor erfasste Lage der Fahrerkabine 1 dient gemeinsam mit der Geschwindigkeitsinformation des LKW 6, dessen Standort und den Geodaten als Eingangsgröße für die anschließende Lageregelung der Fahrerkabine 1. So wird in der Recheneinheit 5 basierend auf der Differenz der aktuellen Neigung der Fahrerkabine 1 und der Neigung des vorausliegenden Straßenverlaufes ein erforderlicher Neigungswinkel der Fahrerkabine 1 errechnet. Mit einbezogen werden zu jedem Zeitpunkt die aktuelle Fahrzeuggeschwindigkeit sowie der aktuelle Standort, um die Neigung der Fahrerkabine 1 vorausschauend an die vorausliegende Topographie der Fahrtroute anzupassen. Durch das Wissen über die Fahrzeugposition und die aktuelle Geschwindigkeit wird der Zeitpunkt des Erreichens eines vorausliegenden Standortes bestimmt, dessen Geländeneigung über die Geodaten definiert ist, sodass der Zeitpunkt zur Einstellung einer neuen Kabinenneigung exakt ermittelt werden kann. Hierdurch wird vermieden, dass eine neue Lageregelung erst durch eine veränderte Neigungsinformation der Fahrerkabine 1 veranlasst wird. Dies steigert den Fahrkomfort und lässt die Lageregelung für den Fahrer unbemerkt erfolgen und sorgt für eine optimale Ausrichtung der Sensoren 4 auf den vorausliegenden Straßenverlauf.

### Bezugszeichenliste

- 1: Fahrerkabine
- 2: Chassis
- 3: verstellbares Luftfederelement
- 4: Sensor
- 5: Recheneinheit
- 6: Fahrzeug

## Patentansprüche

1. Verfahren zur Lageregelung einer Fahrerkabine (1) mit in oder an der Kabine starr montierten Sensoren für Fahrerassistenzsysteme,
wobei die Fahrerkabine (1) auf dem Chassis (2) gelagert und verstellbar ist,
**dadurch gekennzeichnet, dass**
ein oder mehrere Stellglieder in Form verstellbarer Luftfederelemente (3) ausgebildet sind und eine Vielzahl von am Fahrzeug befindlichen Sensoren (4) Zustandsgrößen erfassen, die vorzugsweise mit auf dem Streckenverlauf einer Fahrtroute vorausliegenden und in einer Datenbank hinterlegten Geodaten / Topographiedaten in einer Recheneinheit (5) zur Regelung der Kabinenneigung in Steuersignale zur Verstellung der Luftfederelemente (3) verarbeitet werden.

2. Verfahren zur Lageregelung einer Fahrerkabine (1) nach Anspruch 1,
**dadurch gekennzeichnet, dass**
die Luftfederelemente (3) als Feder- und Dämpfungselemente ausgebildet sind.

3. Verfahren zur Lageregelung einer Fahrerkabine (1) nach Anspruch 1 oder 2,
**dadurch gekennzeichnet, dass**
die Sensoren (4) die Fahrzeugposition,
die Lage / Neigung der Fahrerkabine (1) und / oder des Chassis (2) und die Fahrzeuggeschwindigkeit erfassen.

4. Verfahren zur Lageregelung einer Fahrerkabine (1) nach einem der vorhergehenden Ansprüche,
**dadurch gekennzeichnet, dass**
die Fahrzeugposition (6) mittels eines Navigationssatellitensystems zur Positionsbestimmung, vorzugsweise GPS, und / oder über das Mobilfunknetz bestimmt wird.

5. Verfahren zur Lageregelung einer Fahrerkabine (1) nach einem der Ansprüche 1 bis 3,
**dadurch gekennzeichnet, dass**
die Fahrzeugposition (6) anhand einer drahtlosen Kommunikation zwischen den Fahrzeugen untereinander und der Verkehrsinfrastruktur und / oder dem Fahrzeugumfeld bestimmt wird.

6. Verfahren zur Lageregelung einer Fahrerkabine (1) nach einem der Ansprüche 1 bis 5,
**dadurch gekennzeichnet, dass**
die Lagebestimmung der Fahrerkabine (1) und / oder des Chassis (2) über einen 2- oder 3-Achs Beschleunigungssensor erfolgt.

7. Verfahren zur Lageregelung einer Fahrerkabine (1) nach einem der Ansprüche 1 bis 6,
**dadurch gekennzeichnet, dass**
die Fahrtroute in der Recheneinheit aus dem Geschwindigkeitsvektor und dem vorausliegenden Streckenverlauf bestimmt wird.

8. Verfahren zur Lageregelung einer Fahrerkabine (1) nach einem der Ansprüche 1 bis 6,
**dadurch gekennzeichnet, dass**
sich die Fahrtroute aus der Routeninformation des Navigationssystems bestimmt.

9. Verfahren zur Lageregelung einer Fahrerkabine (1) nach einem der vorhergehenden Ansprüche,
**dadurch gekennzeichnet, dass**
durch einen Abgleich der Daten zur Fahrzeugposition, Fahrzeuggeschwindigkeit und der Neigung der Fahrzeugkabine (1) und / oder des Chassis (2) mit den Geodaten eine Standortkorrektur durchgeführt wird.

10. Verwendung des Verfahrens zur Lageregelung einer Fahrerkabine (1) nacheinem der vorhergehenden Ansprüche in Fahrzeugen mit Fahrerassistenzsystemen.
